# EUROPEAN PATENT APPLICATION

(11) **EP 3 136 307 A1**
(43) Date of publication of application: **01.03.2017**
(21) Application number: 16162409.3
(22) Date of filing: 24.03.2016
(51) Int. Cl.: G06Q 10/00, G06Q 50/16

(54) **METHOD AND DEVICE FOR SECURITY ASSESSMENT**

(30) Priority: 31.08.2015 CN 201510546508
(71) Applicant: Xiaomi Inc., Beijing 100085 (CN)
(72) Inventor: CHEN, Shuai, 100085 BEIJING (CN); LIU, Tiejun, 100085 BEIJING (CN); ZHANG, Xiangyang, 100085 BEIJING (CN)
(74) Representative: Cougard, Jean-Marie

(57) **Abstract**

The present disclosure relates to a method and a device for security assessment, which involves field of communications. The method includes: acquiring (S11) a user record of a user, the user record including an identity, position information, recording time and credit information of the user; determining (S12) a region where the user is located according to the position information in the user record; acquiring (S13) user records of all users in the region; calculating (S14) a degree of security of the region according to the user records of all the users in the region; and sending (S15) the degree of security to the user.

## Description

### TECHNICAL FIELD

The present disclosure relates to field of communications, and more particularly, to a method and a device for security assessment.

### BACKGROUND

With the development and progress of urbanization, some large and medium-sized cities are usually composed of a plurality of urban regions. Each region forms respective residential areas and business areas. With the improvement of the living standards of people, the degree of security of the region where everyone is located becomes the top issue for people.

### SUMMARY

In order to solve the problems existing in the related art, the present disclosure provides a method and a device for security assessment.

According to a first aspect of embodiments of the present disclosure, there is provided a method for security assessment, including:
acquiring a user record of a user, the user record including an identity, position information, recording time and credit information of the user;
determining a region where the user is located according to the position information in the user record;
acquiring user records of all users in the region;
calculating a degree of security of the region according to the user records of all the users in the region; and
sending the degree of security to the user.

According to a first implementation manner of the first aspect of the present disclosure, the calculating the degree of security of the region according to the user records of all the users in the region includes:
calculating a security factor of the region according to the user records of all the users in the region, the security factor being for characterizing the degree of security of the region;
sorting the security factor of the region and security factors of a plurality of preset regions in a descending order, the plurality of preset regions being regions within a preset range of the region where the user is located; and
when the security factor of the region where the user is located is one of the top N security factors, determining that the degree of security of the region where the user is located is low; and when the security factor of the region where the user is located is one of the last M security factors, determining that the degree of security of the region where the user is located is high, M and N being positive integers.

The foregoing calculation method selects regions with high and low degrees of security according to the ordering of the security factors, is applicable to a scenario with more regions, and can remind the user of the relative degree of security of the region where the user is currently located in the entire city or urban area.

According to another implementation manner of the first aspect of the present disclosure, the calculating the degree of security of the region according to the user records of all the users in the region includes:
calculating a security factor of the region according to the user records of all the users in the region, the security factor being for characterizing the degree of security of the region; and
when the security factor of the region is greater than a preset value, determining that the degree of security of the region is low, and when the region of security factor is less than or equal to the preset value, determining that the degree of security of the region is high.

The foregoing calculation method selects regions with high and low degrees of security according to a magnitude relation between the security factor and the preset value, which is equivalent to calculate the absolute degree of security, is applicable to a scenario with fewer regions, and has stronger warning effects.

According to another implementation manner of the first aspect of the present disclosure, the calculating the security factor of the region according to the user records of all the users in the region includes:
finding out bad credit records from the user records of all the users in the region; and
calculating the security factor of the region according to the found bad credit records.

In the foregoing implementation manner, the security factor of the region is determined by using the credit information. The credit information is used for judging the credibility of one person all the time, while the person with lower credibility usually has higher criminal probability, and the degree of security of the region where the user is located is determined by all the users active in the region; therefore, the accuracy of finding out the bad credit records from the user records of all the users in the region so as to determine the degree of security is high.

According to another implementation manner of the first aspect of the present disclosure, the calculating the security factor of the region according to the found bad credit records includes:
acquiring recording time of each of the bad credit records;
determining a coefficient corresponding to the recording time of the bad credit record, the coefficient corresponding to the recording time increases as the recording time is closer to the current time; and
calculating a sum of the coefficients corresponding to the recording time of the found bad credit records to obtain the security factor of the region.

During calculation, the coefficient corresponding to the recording time of the bad credit record is employed for calculation. The probability of the user still in a given region currently is smaller when the recording time is further than the current time; therefore, the influence on the degree of security is smaller. This calculation method is similarly beneficial for improving the accuracy of the degree of security.

According to another implementation manner of the first aspect of the present disclosure, the acquiring the user record of the user includes:
when receiving a security assessment request sent by the user, acquiring the user record of the user, the security assessment request being for acquiring the degree of security of the region.

In the foregoing implementation manner, the user record is acquired to calculate the degree of security only after the user sends the security assessment request, so that the method for security assessment is more targeted.

According to another implementation manner of the first aspect of the present disclosure, the method further includes:
generating the user record of the user.

The generated user record may be used to calculate the degree of security of the region in a subsequent procedure.

According to another implementation manner of the first aspect of the present disclosure, the generating the user record of the user includes:
acquiring user information of the user, the user information including an identity of the user, position information, and time corresponding to the position information;
querying credit information of the user from a credit server according to the identity of the user; and
generating the user record according to the identity, the position information, the time corresponding to the position information and the credit information of the user, the recording time in the user record being the time corresponding to the position information.

In the implementation manner, the user information is acquired firstly, then the credit information is queried according to the identity of the user, so as to generate the user record. The implementation manner is simple.

According to a second aspect of embodiments of the present disclosure, there is provided a device for security assessment, including:
a first acquisition module configured to acquire a user record of a user, the user record including an identity, position information, recording time and credit information of the user;
a determination module configured to determine a region where the user is located according to the position information in the user record;
a second acquisition module configured to acquire user records of all users in the region;
a processing module configured to calculate a degree of security of the region according to the user records of all the users in the region; and
a sending module configured to send the degree of security to the user.

According to an implementation manner of the second aspect of the present disclosure, the processing module includes:
a calculation submodule configured to calculate the security factor of the region according to the user records of all the users in the region, the security factor being for characterizing the degree of security of the region;
a sorting submodule configured to sort the security factor of the region and security factors of a plurality of preset regions in a descending order, the plurality of preset regions being regions within a preset range of the region where the user is located; and
a determination submodule configured to, when the security factor of the region where the user is located is one of the top N security factors, determine that the security factor of the region where the user is located is low; and when the security factor of the region where the user is located is one of the last M security factors, determining that the degree of security of the region where the user is located is high, M and N being positive integers.

The foregoing calculation method selects regions with high and low degrees of security according to the ordering of the security factors, is applicable to a scenario with more regions, and can remind the user of the relative degree of security of the region where the user is currently located in the entire city or urban area.

According to another implementation manner of the second aspect of the present disclosure, the processing module includes:
a calculation submodule configured to calculate the security factor of the region according to the user records of all the users in the region, the security factor being for characterizing the degree of security of the region;
a determination submodule configured to, when the security factor of the region is greater than a preset value, determine that the degree of security of the region is low, and when the region of security factor is less than or equal to the preset value, determine that the degree of security of the region is high.

The foregoing calculation method selects regions with high and low degrees of security according to a magnitude relation between the security factor and the preset value, which is equivalent to calculate the absolute degree of security, is applicable to a scenario with fewer regions, and has stronger warning effects.

According to another implementation manner of the second aspect of the present disclosure, the calculation submodule is specifically configured to:
find out bad credit records from the user records of all the users in the region; and
calculate the security factor of the region according to the found bad credit records.

In the foregoing implementation manner, the security factor of the region is determined by using the credit information. The credit information is used for judging the credibility of one person all the time, while the person with lower credibility usually has higher criminal probability, and the degree of security of the region where the user is located is determined by all the users active in the region; therefore, the accuracy of finding out the bad credit records from the user records of all the users in the region so as to determine the degree of security is high.

According to another implementation manner of the second aspect of the present disclosure, the calculation submodule is specifically configured to:
acquire recording time of each of the bad credit records;
determine a coefficient corresponding to the recording time of the bad credit record, the coefficient corresponding to the recording time changing from small to big as the recording time is closer to the current time; and
calculate a sum of the coefficients corresponding to the recording time of the found bad credit records to obtain the security factor of the region.

In the foregoing implementation manner, the user record is acquired to calculate the degree of security only after the user sends the security assessment request, so that the method for security assessment is more targeted.

According to another implementation manner of the second aspect of the present disclosure, the first acquisition module is specifically configured to:
when receiving a security assessment request sent by the user, acquire the user record of the user, the security assessment request being for acquiring the degree of security of the region.

In the foregoing implementation manner, the user record is acquired to calculate the degree of security only after the user sends the security assessment, so that the method for security assessment is more targeted.

According to another implementation manner of the second aspect of the present disclosure, the device further includes:
a generation module configured to generate the user record of the user.

The user record of the user is generated.

According to another implementation manner of the second aspect of the present disclosure, the generation module includes:
an acquisition submodule configured to acquire user information of the user, the user information including an identity, position information, and time corresponding to the position information of the user;
a query submodule configured to query credit information of the user from a credit server according to the identity of the user; and
a generation submodule configured to generate the user record according to the identity, the position information, the time corresponding to the position information and the credit information of the user, the recording time in the user record being the time corresponding to the position information.

In the implementation manner, the user information is acquired firstly, then the credit information is queried according to the identity of the user, so as to generate the user record. The implementation manner is simple.

According to a third aspect of embodiments of the present disclosure, there is provided a device for security assessment, including:
a processor; and
a memory for storing instructions executable by the processor;
wherein the processor is configured to:
acquire a user record of a user, the user record including an identity, position information, recording time and credit information of the user;
determine a region where the user is located according to the position information in the user record;
acquire user records of all users in the region;
calculate the degree of security of the region according to the user records of all the users in the region; and
send the degree of security to the user.

In the implementation manner, the user information is acquired firstly, then the credit information is queried according to the identity of the user, so as to generate the user record. The implementation manner is simple.

The present invention also provides a computer program, which when executed by a processor of a server or a base station (or more generally of a computer), performs the above method.

In one particular embodiment, the steps of the method for security assessment are determined by computer program instructions.

Consequently, according to a particular aspect, the invention is also directed to a computer program for executing the steps of a method for security assessment as defined above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as defined above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solutions provided by embodiments of the present disclosure may have the following beneficial effects:
the present disclosure determines the region where the user is located according to the user record, then calculates the degree of security of the region according to user records of all users in the region, and sends the degree of security to the user, thus solving the problem that the prior art cannot determine the degree of security of the region where the user is located, and improving the security index of daily life of the user.

It is to be understood that both the foregoing general description and the following detailed description are exemplary and explanatory only and are not restrictive of the invention.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is an application scenario, according to an exemplary embodiment.
Fig. 2 is a flow chart of a method for security assessment, according to an exemplary embodiment.
Fig. 3 is a flow chart of a method for security assessment, according to an exemplary embodiment.
Fig. 4 is a block diagram of a device for security assessment, according to an exemplary embodiment.
Fig. 5 is a block diagram of a device for security assessment, according to an exemplary embodiment.
Fig. 6 is a block diagram of a device for security assessment, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

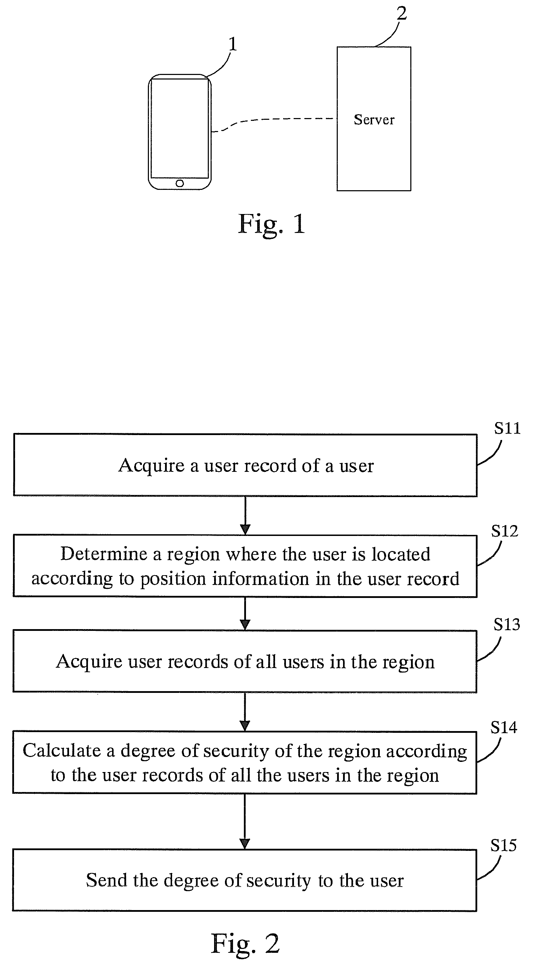

In order to facilitate description of embodiments, an application scenario of the embodiments in the present disclosure is simply introduced hereinafter. Referring to Fig. 1, the scenario scene includes a terminal device 1 and a server 2, wherein the terminal device 1 and the server 2 are wirelessly connected. The terminal device 1 includes, but is not limited to, devices such as a smart mobile phone, and a smart phone. The server 2 is configured to determine a degree of security of a given region, and then send the degree of security to the terminal device 1 of a user in the given region, thus playing a role of reminding and protecting the user. The server 2 may also be other devices, for example, a base station, and a device integrated in the server or in the base station.

It should be illustrated that the foregoing device categories are exemplary only, and are not restricted by the present disclosure.

Fig. 2 is a flow chart of a method for security assessment, according to an exemplary embodiment. As shown in Fig. 2, the method is applicable to the forgoing server or base station, including the following steps.

In step S11, a user record of a user is acquired, the user record including an identity, position information, recording time and credit information of the user.

The identity of the user may be an IMEI (International Mobile Equipment Identity) of a terminal device of the user, an account number of the user, or the like. The position information may be represented by a GPS (Global Positioning System), or may be represented by a position of a base station or a WIFI (Wireless Fidelity) hotspot to which the terminal device of the user accesses. In a particular example, the credit information is representative of a degree of credibility (or of security risk) allocated to a person. The credit information may be personal credit information collected, collated and saved by a personal credit database established by a specific authority. Credit information may be used to provide credit report querying services for commercial banks and individuals, and/or to provide relevant information services for monetary policy making, financial regulation and other functions set forth in laws and regulations.

The recording time mentioned above defines a time associated with the position information of the user record. In other words, the recording time is the time at which the user was positioned at the location defined by the position information of the user record.

In step S12, a region where the user is located (or positioned) is determined according to the position information in the user record.

In a particular embodiment, one city or a bigger (or smaller) district may be divided into a plurality of regions, and the region where the user is located is one of the plurality of regions. The region may be divided according to the administrative region or be divided according to other manners, for example, be divided according to the business area. Because the business area has relatively concentrated population and strong liquidity, the effect of the security assessment in the present disclosure may be exerted to the maximum extent through dividing the region according to the business area.

In step S13, user records of all users in the region are acquired.

In step S14, a degree of security of the region is calculated according to the user records of all the users in the region.

In step S15, the degree of security is sent to the user.

The present disclosure determines the region where the user is located according to the user record, then calculates the degree of security of the region according to user records of all users in the region, and sends the degree of security to the user, thus solving the problem that the prior art cannot determine the degree of security of the region where the user is located, thereby improving the security index of daily life of the user.

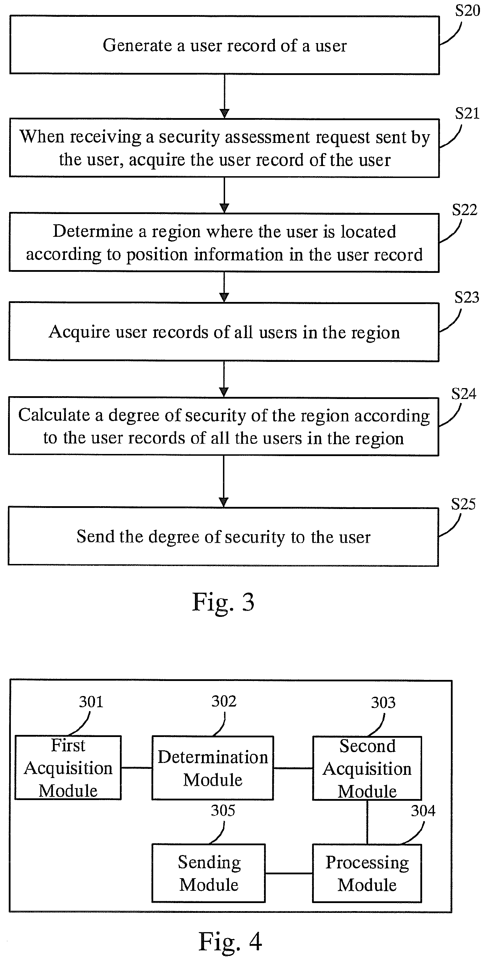

Fig. 3 is a flow chart of a method for security assessment, according to an exemplary embodiment. As shown in Fig. 3, the method is applicable to the foregoing server or base station, including the following steps.

In step S20, a user record of a user is acquired, the user record including an identity, position information, recording time and credit information of the user.

The identity of the user may be an IMEI of a terminal device of the user, an account number of the user, or the like. The position information may be represented by a GPS, or may be represented by a position of a base station or a WIFI hotspot to which the terminal device of the user accesses. The credit information is personal credit information collected, collated and saved by a personal credit database established by a specific authority, and is used to provide credit report querying services for commercial banks and individuals, and provide relevant information services for monetary policy making, financial regulation and other functions set forth in laws and regulations.

In the present embodiment, the generating the user record of the user may include:
acquiring the user information of the user, the user information including an identity, position information, and time corresponding to the position information of the user;
querying credit information of the user from a credit server according to the identity of the user; and
generating the user record according to the identity, the position information, the time corresponding to the position information and the credit information of the user, the recording time in the user record being the time corresponding to the position information.

The credit server may be a server of a third party credit website, the third party credit website is a website specially engaged in work of collecting, collating and analyzing enterprise and personal credit information, for example, Sesame Credit, and Xiaomi Credit.

The user record is generated using the foregoing manner; moreover, and subsequent calculation demands may be ensured.

In the present embodiment, acquiring the user record of the user may include:
receiving the user information sent by the terminal device of the user, the position information in the user information being GPS information;
or, receiving the user information sent by an operator, the position information in the user information being the base station or WIFI to which the terminal device of the user accesses;
or, acquiring the user information from an operator server periodically, the position information in the user information being the base station or WIFI to which the terminal device of the user accesses.

In step S21, when receiving a security assessment request sent by the user, the user record of the user is acquired, the security assessment request being configured to acquire the degree of security of the region.

In other embodiments, the user may launch a security assessment service for the server. After the user launches the security assessment service, the server periodically acquires the user record of the user and carries out subsequent steps. The security assessment service is configured to periodically acquire the degree of security of the region.

In step S22, a region where the user is located is determined according to the position information in the user record.

In a particular embodiment, one city or a bigger (or smaller) district may be divided into a plurality of regions, and the region where the user is located is one of the plurality of regions. The region may be divided according to the administrative region or be divided according to other manners, for example, be divided according to the business area. Because the business area has relatively concentrated population and strong liquidity, the effect of the security assessment in the present disclosure may be exerted to the maximum extent through dividing the region according to the business area.

In step S23, user records of all users in the region are acquired.

Because the foregoing step S20 may be repeatedly performed for different users, a large number of user records may be generated, and the generated user records will be stored in the server. In step S23, the server finds the user records of all the users is located in the region according to the position information and then acquires these user records.

In other embodiments, when acquiring the user record, recording time also needs to be considered except screening the position information, i.e., only partial user records of the region are acquired. For example, the user records of the region having the recording time within a preset range are acquired, wherein the present range may be one month, one week, or the like.

In step S24, the degree of security of the region is calculated according to the user records of all the users in the region.

In an implementation manner of the embodiment, calculating the degree of security of the region according to the user records of all the users in the region may include:
calculating a security factor of the region according to the user records of all the users in the region, the security factor being configured to characterize the degree of security of the region;
sorting the security factor of the region and security factors of a plurality of preset (or predefined) regions in a descending order, the plurality of preset regions being regions within a preset range of the region where the user is located; and
when the security factor of the region where the user is located is one of the top N security factors, determining that the degree of security of the region where the user is located is low; and when the security factor of the region where the user is located is one of the last M security factors, determining that the degree of security of the region where the user is located is high, M and N being positive integers.

The preset range may be divided by district or by distance, for example, a region which is in the same district as the region where the user is located, or within 10 km from the region where the user is located.

When a city or an urban area includes more regions, the foregoing manner may be employed to calculate the degree of security of the region. This calculation method selects regions with high and low degrees of security according to the ordering positions of the security factors, which may remind the user of the relative degree of security of the region in the entire city or urban area.

For example, in four regions A, B, C and D of city I, their security factors are 90, 70, 68 and 50 respectively, and the descending order of the security factors is: A, B, C, D. The top 1 (i.e., the foregoing N) region among the four regions is selected as the region with low degree of security, i.e., region A; and the last 3 (i.e., the foregoing M) regions among the four regions are selected as the regions with high degrees of security, i.e., regions B, C and D. Certainly, in the present embodiment, the degree of security of the region may be divided into more levels except employing high and low levels to represent the degree of security of the region, for example, excellent, good, middle and poor, which are exemplary only and not restrictive of the present disclosure.

Moreover, in the foregoing implementation manner, the security factors may also be sorted in an ascending order.

In another implementation manner of the present embodiment, calculating the degree of security of the region according to the user records of all the users in the region may include:
calculating a security factor of the region according to the user records of all the users in the region; and
when the security factor of the region is greater than a preset value, determining that the degree of security of the region is low (e.g. at a predefined low level), and when the security factor of the region is less than or equal to the preset value, determining that the degree of security of the region is high (e.g. at a predefined high level).

Compared with the previous manner, this manner is to calculate an absolute degree of security, which has a stronger warning effect. The preset value may be set according to actual needs.

For example, in four regions A, B, C and D of city I, the security factors are 90, 70, 68 and 50 respectively, wherein the preset value is 75, then the region A is determined to be the region with low degree of security, and the regions B, C and D are determined to be the regions with high degree of security.

In the foregoing two implementation manners, calculating the security factor of the given region according to user records in the given region may include:
finding out bad credit records from the user records of all the users in the region; and
calculating the security factor of the region according to the found bad credit records.

The bad credit record is also called a bad faith record (blemished credit), for example, a bank customer has a late repayment record due to some reasons after applying a loan; at this moment the credit information in the user record is namely a bad credit record.

In the foregoing implementation manner, the security factor of the region is determined by using the credit information. The credit information is used for judging the credibility of one person all the time, while the person with lower credibility usually has higher criminal probability, and the degree of security of the region where the user is located is determined by all the users active in the region; therefore, the accuracy of determining the degree of security by finding out the bad credit records from the user records of all the users in the region is high.

In embodiments of the present disclosure, the manner identical to that of the region is also employed in a plurality of preset regions for calculating the security, which will not be elaborated herein.

The calculating the security factor of the region according to the found bad credit records may include:
acquiring recording time of each of the bad credit records;
determining a coefficient corresponding to the recording time of the bad credit record, the coefficient corresponding to the recording time changing from small to big with the recording time being closer to the current time (in other words, the coefficient corresponding to the recording time increases as the recording time gets closer to the current time); and
calculating a sum of the coefficients corresponding to the recording time of the found bad credit records to obtain the security factor of the region.

For example, there are 100 bad credit records among the user records of all the users in the region D, wherein the recording time of 50 bad credit records is 5 hours ago, the recording time of 25 bad credit records is 1 hour ago, and the recording time of 25 bad credit records is within 1 hour. Accordingly, the coefficients corresponding to the recording time (5 hours ago, 1 hour ago and 1 hour) are respectively 0.2, 0.6 and 1; therefore, the security factor = 50*0.2+25*0.6+25*1=50. Certainly, the coefficients corresponding to the recording time herein are exemplary only and are not restrictive of the present disclosure.

In addition, during calculation, the coefficient corresponding to the recording time of the bad credit record is employed for calculation. The farther the recording time from the current time is, the less the probability of the user still in a given region currently is, and therefore the smaller the influence on the degree of security is. This calculation method is similarly beneficial for improving the accuracy of the degree of security.

In step S25, the degree of security is sent to the user.

The above-mentioned step of sending the degree of security to the user may include: pushing the degree of security of the given region to the terminal device of the user in a form of short message or in other message forms.

In other embodiments, the degree of security may be judged before conducting the step S25, and the degree of security is sent to the user only when the degree of security is low, thus reminding the user of self-protection.

The present disclosure determines the region where the user is located according to the user record, then calculates the degree of security of the region according to user records of all users in the region, and sends the degree of security to the user, thus solving the problem that the prior art cannot determine the degree of security of the region where the user is located, and improving the security index of daily life of the user.

Fig. 4 is a block diagram of a device for security assessment, according to an exemplary embodiment. As shown in Fig. 4, the device may be a server or a base station, and may also be a device integrated in the server or in the base station. The device includes: a first acquisition module 301, a determination module 302, a second acquisition module 303, a processing module processing module 304, and a sending module 305.

The first acquisition module 301 is configured to acquire a user record of a user, the user record including an identity of the user, position information, recording time and credit information.

The identity of the user may be an IMEI of a terminal device of the user, an account number of the user, or the like. The position information may be represented by a GPS, or may be represented by a position of a base station or a WIFI hotspot to which the terminal device of the user accesses. The credit information is personal credit information collected, collated and saved by a personal credit database established by a specific authority, and is used to provide credit report querying services for commercial banks and individuals, and provide relevant information services for monetary policy making, financial regulation and other functions set forth in laws and regulations.

The determination module 302 is configured to determine a region where the user is located according to the position information in the user record.

In disclosure particular embodiment, one city or a bigger (or smaller) district may be divided into a plurality of regions, and the region where the user is located is one of the plurality of regions. The region may be divided according to the administrative region or be divided according to other manners, for example, be divided according to the business area. Because the business area has relatively concentrated population and strong liquidity, the effect of the security assessment in the present disclosure may be exerted to the maximum extent through dividing the region by the business area.

The second acquisition module 303 is configured to acquire user records of all the users in the region.

The processing module processing module 304 is configured to calculate a degree of security of the region according to the user records of all the users in the region.

The sending module 305 is configured to send the degree of security to the user.

In a particular embodiment, the present invention determines the region where the user is located according to the user record, then calculates the degree of security of the region according to user records of all users in the region, and sends the degree of security to the user, thus solving the problem that the prior art cannot determine the degree of security of the region where the user is located, thereby improving the security index of daily life of the user.

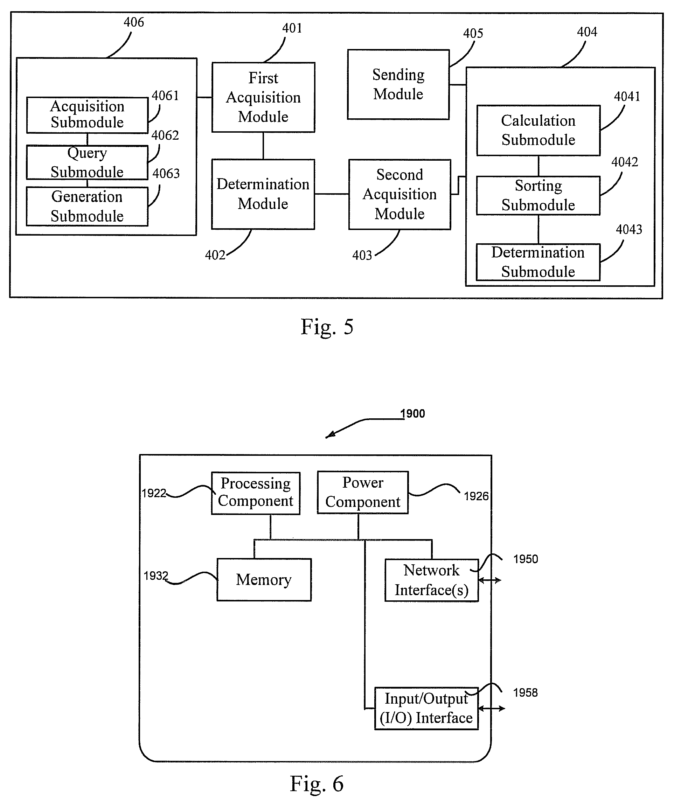

Fig. 5 is a block diagram of another device for security assessment, according to an exemplary embodiment. As shown in Fig. 5, the device may be a server or a base station, and may also be a device integrated in the server or in the base station. The device includes: a first acquisition module 401, a determination module 402, a second acquisition module 403, a processing module processing module 404, and a sending module 405.

The first acquisition module 401 is configured to acquire a user record of a user, the user record including an identity of the user, position information, recording time and credit information.

The identity of the user may be an IMEI of a terminal device of the user, an account number of the user, or the like. The position information may be represented by a GPS, or may be represented by a position of a base station or a WIFI hotspot to which the terminal device of the user accesses.

In a particular example, the credit information is representative of a degree of credibility (or of security risk) allocated to a person. The credit information may be personal credit information collected, collated and saved by a personal credit database established by a specific authority. Credit information may be used to provide credit report querying services for commercial banks and individuals, and/or to provide relevant information services for monetary policy making, financial regulation and other functions set forth in laws and regulations.

The recording time defines a time associated with the position information of the user record. In other words, the recording time is the time at which the user was positioned at the location defined by the position information of the user record.

The determination module 402 is configured to determine a region where the user is located according to the position information in the user record.

In a particular embodiment, one city or a bigger (or smaller) district may be divided into a plurality of regions, and the region where the user is located is one of the plurality of regions. The region may be divided according to the administrative region or be divided according to other manners, for example, be divided according to the business area. Because the business area has relatively concentrated population and strong liquidity, the effect of the security assessment in the present disclosure may be exerted to the maximum extent through dividing the region by the business area.

The second acquisition module 403 is configured to acquire user records of all the users in the region.

The processing module processing module 404 is configured to calculate a degree of security of the region according to the user records of all the users in the region.

The sending module 405 is configured to send the degree of security to the user.

In an implementation manner embodiments of the present disclosure, the processing module 404 includes:
a calculation submodule 4041 configured to calculate the security factor of the region according to the user records of all the users in the region, the security factor being configured to characterize the degree of security of the region;
a sorting submodule 4042 configured to sort the security factor of the region and security factors of a plurality of preset regions in a descending order, the plurality of preset regions being regions within a preset range of the region where the user is located; and
a determination submodule 4043 configured to, when the security factor of the region where the user is located is one of the top N security factors, determine that the security factor of the region where the user is located is low; and when the security factor of the region where the user is located is one of the last M security factors, determine that the degree of security of the region where the user is located is high, M and N being positive integers.

The preset range may be divided by district or by distance, for example, a region which is in the same district as the region where the user is located, or within 10 km of the region where the user is located.

When a city or an urban area includes more regions, the foregoing manner may be employed to calculate the degree of security of the region where the user is located. This calculation method selects regions with high and low degrees of security according to the ordering positions of the security factors, which may remind the user of the relative degree of security of the region in the entire city or urban area.

For example, in four regions A, B, C and D of city I, their security factors are 90, 70, 68 and 50 respectively, and the descending order of the security factors is: A, B, C, D. The top 1 (i.e., the foregoing N) region among the four regions is selected as the region with low degree of security, i.e., region A; and the last 3 (i.e., the foregoing M) regions among the four regions are selected as the regions with high degrees of security, i.e., regions B, C and D. Certainly, in the present embodiment, the degree of security of the region may be divided into more levels except employing high and low levels to represent the degree of security of the region, for example, excellent, good, middle and poor, which are exemplary only and not restrictive of the present disclosure.

Moreover, in the foregoing implementation manner, the security factors may also be sorted in an ascending order.

In another implementation manner of embodiments of the present disclosure, the processing module 404 includes:
a calculation submodule 4041 configured to calculate the security factor of the region according to the user records of all the users in the region, the security factor being configured to characterize the degree of security of the region; and
a determination submodule 4043 configured to, when the security factor of the region is greater than a preset value, determine that the degree of security of the region is low, and when the region of security factor is less than or equal to the preset value, determine that the degree of security of the region is high.

Compared with the previous manner, this manner is to calculate an absolute degree of security, which has a stronger warning effect. The preset value may be set according to actual needs.

For example, in four regions A, B, C and D of city I, the security factors are 90, 70, 68 and 50 respectively, wherein the preset value is 75, then the region A is determined to be the region with low degree of security, and the regions B, C and D are determined to be the regions with high degree of security.

In the foregoing two implementation manners, the calculation submodule 4041 is specifically configured to:
find out bad credit records from the user records of all the users in the region; and
calculate the security factor of the region according to the found bad credit records.

The bad credit record is also called a bad faith record (blemished credit), for example, a bank customer has a late repayment record due to some reasons after applying a loan; at this moment the credit information in the user record is namely a bad credit record.

In embodiments of the present disclosure, the manner identical to that of the region is also employed in a plurality of preset regions for calculating the security, which will not be elaborated herein.

Further, the calculation submodule 4041 is specifically configured to:
acquire the recording time of each of the bad credit records;
determine a coefficient corresponding to the recording time of the bad credit record, the coefficient corresponding to the recording time changing from small to big with the recording time being closer to the current time (in other words, the coefficient corresponding to the recording time increase as the recording time gets closer to the current time); and
calculate a sum of the coefficients corresponding to the recording time of the bad credit records found out to obtain the security factor of the region.

For example, there are 100 bad credit records among the user records of all the users in the region D, wherein the recording time of 50 bad credit records is 5 hours ago, the recording time of 25 bad credit records is 1 hour ago, and the recording time of 25 bad credit records is within 1 hour. Accordingly, the coefficients corresponding to the recording times (5 hours ago, 1 hour ago and within 1 hour) are respectively 0.2, 0.6 and 1; therefore, the security factor = 50*0.2+25*0.6+25*1=50. Certainly, the coefficients corresponding to the recording time herein are exemplary only and are not restrictive of the present disclosure.

In addition, during calculation, the coefficient corresponding to the recording time of the bad credit record is employed for calculation. The farther the recording time from the current time is, the less the probability of the user still in a given region currently is, and therefore, the smaller the influence on the degree of security is. This calculation method is similarly beneficial for improving the accuracy of the degree of security.

In embodiments of the present disclosure, the first acquisition module 401 is specifically configured to:
when receiving a security assessment request sent by the user, acquire the user record of the user, the security assessment request being configured to acquire the degree of security of the region.

In other embodiments, the user may launch a security assessment service for the server. After the user launches the security assessment service, the first acquisition module 401 may periodically acquires the user record of the user. The security assessment service is configured to periodically acquire the degree of security of the region.

Moreover, the device further includes:
a generation module 406 configured to generate the user record of the user.

The generation module 406 includes:
an acquisition submodule 4061 configured to acquire the user information of the user, the user information including an identity of the user, position information, and time corresponding to the position information;
a query submodule 4062 configured to query the credit information of the user from a credit server according to the identity of the user; and
a generation submodule 4063 configured to generate the user record according to the identity of the user, the position information, the time corresponding to the position information and the credit information, the recording time in the user record being the time corresponding to the position information.

The credit server may be a server of a third party credit website, the third party credit website is specially engaged in work of collecting, collating and analyzing enterprise and personal credit information, for example, Sesame Credit, and Xiaomi Credit.

The user record is simply and conveniently generated using the foregoing manner; moreover, subsequent calculation demands may be ensured.

In embodiment particular embodiment, the acquisition submodule 4061 may be specifically configured to receive the user information sent by the terminal device of the user, the position information in the user information being GPS information; or receive the user information sent by an operator, the position information in the user information being the base station or WIFI to which the terminal device of the user accesses; or, acquire the user information from an operator server periodically, the position information in the user information being the base station or WIFI to which the terminal device of the user accesses.

In embodiments of the present disclosure, the sending module 405 is specifically configured to push the degree of security of the given region to the terminal device of the user by short message or other message forms.

In a particular embodiment, the present invention determines the region where the user is located according to the user record, then calculates the degree of security of the region according to user records of all users in the region, and sends the degree of security to the user, thus solving the problem that the prior art cannot determine the degree of security of the region where the user is located, and improving the security index of daily life of the user.

With respect to the devices in the above embodiments, the specific manners for performing operations for individual modules therein have been described in detail in the embodiments regarding the methods, which will not be elaborated herein.

Fig. 6 is a block diagram of a device 1900 for security assessment, according to an exemplary embodiment. For example, the device 1900 may be provided as a server. Referring to Fig. 6, the device 1900 includes a processing component 1922 that further includes one or more processors, and memory resources represented by a memory 1932 for storing instructions executable by the processing component 1922, such as application programs. The application programs stored in the memory 1932 may include one or more modules each corresponding to a set of instructions. Further, the processing component 1922 is configured to execute the instructions to perform the above method for security assessment:
acquiring a user record of a user, the user record including an identity, position information, recording time and credit information of the user;
determining a region where the user is located according to the position information in the user record;
acquiring user records of all users in the region;
calculating a degree of security of the region according to the user records of all the users in the region; and
sending the degree of security to the user.

The device 1900 may also include a power component 1926 configured to perform power management of the device 1900, wired or wireless network interface(s) 1950 configured to connect the device 1900 to a network, and an input/output (I/O) interface 1958. The device 1900 may operate based on an operating system stored in the memory 1932, such as Windows Server™, Mac OS X™, Unix™, Linux™, FreeBSD™, or the like.

In exemplary embodiments, there is also provided a non-transitory computer-readable storage medium including instructions, such as included in the memory 1932, executable by the processor in the device 1900, for performing the above-described methods. For example, the non-transitory computer-readable storage medium may be a ROM, a RAM, a CD-ROM, a magnetic tape, a floppy disc, an optical data storage device, and the like.

A non-transitory computer readable storage medium, when an instruction in the storage medium is performed by a processor of a device, enables the device to perform the method for security assessment, wherein the method includes:
acquiring a user record of a user, the user record including an identity, position information, recording time and credit information of the user;
determining a region where the user is located according to the position information in the user record;
acquiring user records of all users in the region;
calculating a degree of security of the region according to the user records of all the users in the region; and
sending the degree of security to the user.

The calculating the degree of security of the region according to the user records of all the users in the region includes:
calculating a security factor of the region according to the user records of all the users in the region, the security factor being configured to characterize the degree of security of the region;
sorting the security factor of the region and security factors of a plurality of preset regions in a descending order, the plurality of preset regions being regions within a preset range of the region; and
when the security factor of the region where the user is located is one of the top N security factors, determining that the degree of security of the region where the user is located is; and when the security factor of the region where the user is located is one of the last M security factors, determining that the degree of security of the region where the user is located is high, M and N being positive integers.

The calculating the degree of security of the region according to the user records of all the users in the region includes:
calculating a security factor of the region according to the user records of all the users in the region, the security factor being configured to characterize the degree of security of the region;
when the security factor of the region is greater than a preset value, determining the degree of security of the region to be low, and when the region of security factor is less than or equal to the preset value, determining the degree of security of the region to be high.

The calculating the degree of security of the region according to the user records of all the users in the region includes:
finding out bad credit records from the user records of all the users in the region; and
calculating the security factor of the region according to the found bad credit records.

The calculating the security factor of the region according to the found bad credit records includes:
acquiring the recording time of each of the bad credit records;
determining a coefficient corresponding to the recording time of the bad credit record, the coefficient corresponding to the recording time changing from small to big (i.e. increases) with the recording time being closer to the current time; and
calculating a sum of the coefficients corresponding to the recording time of the found bad credit records to obtain the security factor of the region.

The acquiring the user record of the user includes:
when receiving a security assessment request sent by the user, acquiring the user record of the user, the security assessment request being configured to acquire the degree of security of the region.

Moreover, the method further includes:
generating the user record of the user.

The generating the user record of the user includes:
acquiring the user information of the user, the user information including an identity of the user, position information, and time corresponding to the position information;
querying the credit information of the user from a credit server according to the identity of the user; and
generating the user record according to the identity of the user, the position information, the time corresponding to the position information and the credit information, the recording time in the user record being the time corresponding to the position information.

## Claims

1. A method for security assessment, **characterised in that** it comprises:
acquiring (S11) a user record of a user, the user record comprising an identity, position information, recording time and credit information of the user;
determining (S12, S22) a region where the user is located according to the position information in the user record;
acquiring (S13, S23) user records of all users in the region;
calculating (S14, S24) a degree of security of the region according to the user records of all the users in the region; and
sending (S15, S25) the degree of security to the user.

2. The method according to claim 1, wherein the calculating (S14) the degree of security of the region according to the user records of all the users in the region comprises:
calculating a security factor of the region according to the user records of all the users in the region, the security factor being for characterizing the degree of security of the region;
sorting the security factor of the region where the user is located and security factors of a plurality of preset regions in a descending order, the plurality of preset regions being regions within a preset range of the region where the user is located; and
wherein, when if the security factor of the region where the user is located is one of the top N security factors, determining that the degree of security of the region where the user is located is low; and when the security factor of the region where the user is located is one of the last M security factors, determining that the degree of security of the region where the user is located is high, M and N being positive integers.

3. The method according to claim 1, wherein the calculating (S14) the degree of security of the region according to the user records of all the users in the region comprises:
calculating a security factor of the region according to the user records of all the users in the region, the security factor being for characterizing the degree of security of the region; and wherein,
when the security factor of the region is greater than a preset value, determining that the degree of security of the region is low; and when the region of security factor is less than or equal to the preset value, determining that the degree of security of the region is high.

4. The method according to claim 2 or 3, wherein the calculating (S11) the security factor of the region according to the user records of all the users in the region comprises:
finding out a bad credit record from the user records of all the users in the region where the user is located; and
calculating the security factor of the region where the user is located according to the found bad credit record.

5. The method according to claim 4, wherein the calculating the security factor of the region where the user is located according to the found bad credit records comprises:
acquiring recording time of each of the bad credit records;
determining a coefficient corresponding to the recording time of the bad credit record, wherein the coefficient corresponding to the recording time increases as the recording time gets closer to current time; and
calculating a sum of the coefficients corresponding to the recording time of the found bad credit records to obtain the security factor of the region where the user locates.

6. The method according to any one of claims 1 to 5, wherein the acquiring the user record of the user comprises:
when receiving a security assessment request sent by a user, acquiring (S21) the user record of the user, the security assessment request being for acquiring the degree of security of the region where the user is located.

7. A device for security assessment, comprising:
a first acquisition module (301, 401) configured to acquire a user record of a user, the user record comprising an identity, position information, recording time and credit information of the user;
a determination module (302, 402) configured to determine a region where the user is located according to the position information in the user record;
a second acquisition module (303, 403) configured to acquire user records of all users in the region;
a processing module (304, 404) configured to calculate a degree of security of the region according to the user records of all the users in the region; and
a sending module (305, 405) configured to send the degree of security to the user.

8. The device according to claim 7, wherein the processing module (404) comprises:
a calculation submodule (4041) configured to calculate a security factor of the region according to the user records of all the users in the region, the security factor being for characterizing the degree of security of the region;
a sorting submodule (4042) configured to sort the security factor of the region and security factors of a plurality of preset regions in a descending order, the plurality of preset regions being regions within a preset range of the region where the user is located; and
a determination submodule (4043) configured to, when the security factor of the region where the user is located is one of the top N security factors, determine that the security factor of the region where the user is located is low; and when the security factor of the region where the user is located is one of the last M security factors, determine that the security factor of the region where the user is located is high, M and N being positive integer.

9. The device according to claim 7, wherein the processing module (404) comprises:
a calculation submodule (4041) configured to calculate the security factor of the region according to the user records of all the users in the region, the security factor being for characterizing the degree of security of the region; and
a determination submodule (4043) configured to, when the security factor of the region is greater than a preset value, determine that the degree of security of the region is low, and when the region of security factor is less than or equal to the preset value, determine that the degree of security of the region is high.

10. The device according to claim 8 or 9, wherein the calculation submodule (4041) is specifically configured to:
find out a bad credit record from the user records of all the users in the region where the user is located; and
calculate the security factor of the region where the user is located according to the found bad credit record.

11. The device according to claim 10, wherein the calculation submodule (4041) is specifically configured to:
acquire recording time of each of the bad credit records;
determine a coefficient corresponding to the recording time of the bad credit record, wherein the coefficient corresponding to the recording time increases as the recording time gets closer to current time; and
calculate a sum of the coefficients corresponding to the recording time of the found bad credit records out to obtain the security factor of the region where the user is located.

12. The device according to any one of claims 7 to 11, wherein the first acquisition module (301, 401) is specifically configured to:
when receiving a security assessment request sent by a user, acquire the user record of the user, the security assessment request being for acquiring the degree of security of the region where the user is located.

13. The device according to any one of claims 7 to 12, further comprising:
a generation module (406) configured to generate the user record of the user.

14. The device according to claim 13, wherein the generation module (406) comprises:
an acquisition submodule (4061) configured to acquire the user information of the user, the user information comprising an identity, position information, and time corresponding to the position information of the user;
a query submodule (4062) configured to query credit information of the user from a credit server according to the identity of the user; and
a generation submodule (4063) configured to generate the user record according to the identity, the position information, the time corresponding to the position information and the credit information of the user, the recording time in the user record being the time corresponding to the position information.

15. A computer program, which when executing on a processor of a server or a base station, performs a method according to any one of claims 1 to 6.

## Amended claims

### Amended claims in accordance with Rule 137(2) EPC.

1. A method for security assessment, implemented by a server, said method being **characterised in that** it comprises:
generating (S20), for each of a plurality of users, a user record comprising an identity, position information, recording time and credit information of the user, wherein said credit information is representative of a degree of security risk allocated to said user;
acquiring (S11, S21), in response to a security assessment request, the user record of a first user;
determining (S12, S22) a region where the first user is located according to the position information in the user record;
acquiring (S13, S23) the user records of all the users in the region;
calculating (S14, S24) a degree of security of the region according to the user records of all the users in the region; and
sending (S15, S25) the degree of security to a terminal device of the user.

2. The method according to claim 1, wherein the calculating (S14, S24) the degree of security of the region according to the user records of all the users in the region comprises:
calculating a security factor of the region according to the user records of all the users in the region, the security factor being for characterizing the degree of security of the region;
sorting the security factor of the region where the first user is located and security factors of a plurality of preset regions in a descending order, the plurality of preset regions being regions within a preset range of the region where the first user is located; and
wherein, when if the security factor of the region where the first user is located is one of the top N security factors, determining that the degree of security of the region where the first user is located is low; and when the security factor of the region where the first user is located is one of the last M security factors, determining that the degree of security of the region where the first user is located is high, M and N being positive integers.

3. The method according to claim 1, wherein the calculating (S14, S24) the degree of security of the region according to the user records of all the users in the region comprises:
calculating a security factor of the region according to the user records of all the users in the region, the security factor being for characterizing the degree of security of the region; and wherein,
when the security factor of the region is greater than a preset value, determining that the degree of security of the region is low; and when the region of security factor is less than or equal to the preset value, determining that the degree of security of the region is high.

4. The method according to claim 2 or 3, wherein the calculating (S14, S24) the security factor of the region according to the user records of all the users in the region comprises:
finding out a bad credit record from the user records of all the users in the region where the first user is located; and
calculating the security factor of the region where the first user is located according to the found bad credit record.

5. The method according to claim 4, wherein the calculating the security factor of the region where the first user is located according to the found bad credit records comprises:
acquiring recording time of each of the bad credit records;
determining a coefficient corresponding to the recording time of the bad credit record, wherein the coefficient corresponding to the recording time increases as the recording time gets closer to current time; and
calculating a sum of the coefficients corresponding to the recording time of the found bad credit records to obtain the security factor of the region where the first user is located.

6. The method according to any one of claims 1 to 5, wherein the acquiring the user record of the first user comprises:
when receiving a security assessment request sent by a user, acquiring (S21) the user record of the first user, the security assessment request being for acquiring the degree of security of the region where the first user is located.

7. A device for security assessment, comprising:
a generation module (406) configured to generate), for each of a plurality of users, a user record comprising an identity, position information, recording time and credit information of the user, wherein said credit information is representative of a degree of security risk allocated to said user;
a first acquisition module (301, 401) configured to acquire, in response to a security request, the user record of a first user;
a determination module (302, 402) configured to determine a region where the first user is located according to the position information in the user record;
a second acquisition module (303, 403) configured to acquire the user records of all the users in the region;
a processing module (304, 404) configured to calculate a degree of security of the region according to the user records of all the users in the region; and
a sending module (305, 405) configured to send the degree of security to a terminal device of the user.

8. The device according to claim 7, wherein the processing module (404) comprises:
a calculation submodule (4041) configured to calculate a security factor of the region according to the user records of all the users in the region, the security factor being for characterizing the degree of security of the region;
a sorting submodule (4042) configured to sort the security factor of the region and security factors of a plurality of preset regions in a descending order, the plurality of preset regions being regions within a preset range of the region where the first user is located; and
a determination submodule (4043) configured to, when the security factor of the region where the first user is located is one of the top N security factors, determine that the security factor of the region where the first user is located is low; and when the security factor of the region where the first user is located is one of the last M security factors, determine that the security factor of the region where first the user is located is high, M and N being positive integer.

9. The device according to claim 7, wherein the processing module (404) comprises:
a calculation submodule (4041) configured to calculate the security factor of the region according to the user records of all the users in the region, the security factor being for characterizing the degree of security of the region; and
a determination submodule (4043) configured to, when the security factor of the region is greater than a preset value, determine that the degree of security of the region is low, and when the region of security factor is less than or equal to the preset value, determine that the degree of security of the region is high.

10. The device according to claim 8 or 9, wherein the calculation submodule (4041) is specifically configured to:
find out a bad credit record from the user records of all the users in the region where the first user is located; and
calculate the security factor of the region where the first user is located according to the found bad credit record.

11. The device according to claim 10, wherein the calculation submodule (4041) is specifically configured to:
acquire recording time of each of the bad credit records;
determine a coefficient corresponding to the recording time of the bad credit record, wherein the coefficient corresponding to the recording time increases as the recording time gets closer to current time; and
calculate a sum of the coefficients corresponding to the recording time of the found bad credit records out to obtain the security factor of the region where the first user is located.

12. The device according to any one of claims 7 to 11, wherein the first acquisition module (301, 401) is specifically configured to:
when receiving a security assessment request sent by a user, acquire the user record of the first user, the security assessment request being for acquiring the degree of security of the region where the first user is located.

13. The device according to any of claims 7 to 12, wherein the generation module (406) comprises:
an acquisition submodule (4061) configured to acquire the user information of the first user, the user information comprising an identity, position information, and time corresponding to the position information of the first user;
a query submodule (4062) configured to query credit information of the first user from a credit server according to the identity of the user; and
a generation submodule (4063) configured to generate the user record according to the identity , the position information, the time corresponding to the position information and the credit information of the first user, the recording time in the user record being the time corresponding to the position information.

14. A computer program, which when executing on a processor of a server or a base station, performs a method according to any one of claims 1 to 6.
